# FASCICULE DE BREVET EUROPEEN

(11) **EP 0 689 977 B1**
(45) Date de publication et mention de la délivrance du brevet: **14.04.1999**
(21) Numéro de dépôt: 95109980.3
(22) Date de dépôt: 27.06.1995
(51) Int. Cl.: B60S 1/52

(54) **Bras d'essuie-glace comportant un dispositif d'aspersion de la vitre à essuyer**
Scheibenwischerarm mit Spritzvorrichtung für die zu wischenden Scheibe
Windscreen wiper arm having a spray device for the wiped surface

(30) Priorité: 30.06.1994 FR 9408034
(43) Date de publication de la demande: 03.01.1996
(60) Demande divisionnaire: 98110260.1
(73) Titulaire: VALEO SYSTEMES D'ESSUYAGE, 78321 La Verrière (FR)
(72) Inventeur: Dimur, Didier, F-78180 Montigny-le-Bretonneux (FR); Boissac, Jean-Paul, F-86100 Chatellerault (FR)
(74) Mandataire: Gamonal, Didier

(56) Documents cités:
- WO-A-92/21537
- DE-A- 4 130 023
- DE-B- 1 087 482
- FR-A- 2 119 130
- FR-A- 2 646 801

## Description

La présente invention concerne la conception d'un élément d'essuie-glace, et notamment d'un bras d'essuie-glace.

L'invention concerne plus particulièrement un élément d'essuie-glace de forme générale allongée auquel est associé un dispositif de lave-glace comportant un tuyau d'alimentation en liquide de lavage porté par l'élément d'essuie-glace et qui se termine par un organe d'aspersion de la vitre à essuyer.

Le document FR-A-1.295.138 décrit et représente un tel agencement dans lequel l'élément d'essuie-glace présente, en section transversale, une forme générale de U renversé qui délimite un logement longitudinal ouvert dans la face inférieure du bras d'essuie-glace tournée vers la vitre à essuyer et qui reçoit un tuyau souple d'alimentation dans lequel circule le liquide de lavage et qui est prévu pour alimenter au moins un dispositif d'aspersion de la vitre disposé par exemple au voisinage d'une extrémité libre du bras d'essuie-glace.

Cette conception est avantageuse en ce qu'elle permet de protéger le tuyau souple d'alimentation, en ce qu'elle réduit l'encombrement du dispositif d'alimentation et en ce qu'elle permet de conserver au bras d'essuie-glace de bonnes caractéristiques aérodynamiques. Toutefois, la fixation du tuyau souple d'alimentation dans son logement nécessite de faire appel à des dispositifs appropriés de fixation tels que des colliers agencés en différents points du bras d'essuie-glace. Cette conception fait ainsi appel à de nombreux composants coûteux et son assemblage est particulièrement difficile à automatiser.

Selon une autre conception connue, il a déjà également été proposé de réaliser le tuyau souple d'alimentation venu de matière par moulage dans le corps de l'élément d'essuie-glace, notamment du bras d'essuie-glace.

Cette conception permet de supprimer le tuyau d'alimentation sous la forme d'un élément indépendant mais elle est particulièrement complexe à mettre en oeuvre et nécessite de faire appel à des techniques de moulage trop coûteuses.

La présente invention a pour but de proposer un élément d'essuie-glace du type de celui décrit et représenté dans le document FR-A-1.295.138 qui soit d'une conception moins coûteuse et plus simple à mettre en oeuvre, notamment pour l'assemblage des composants du dispositif d'aspersion sur l'élément d'essuie-glace.

Dans ce but, l'invention propose un élément d'essuie-glace caractérisé en ce que le corps est réalisé par moulage et est renforcé par des cloisons transversales et un ce que le tuyau d'alimentation est reçu dans une rainure formée dans lesdites cloisons.

Selon des modes de l'invention :
- le dispositif d'aspersion comporte une chambre d'aspersion agencée à l'intérieur du corps de l'élément d'essuie-glace ;
- la chambre d'aspersion comporte au moins un orifice d'aspersion orienté vers la vitre à essuyer ;
- la chambre d'aspersion comporte au moins un orifice d'alimentation en liquide de lavage qui est relié à une extrémité du tuyau d'alimentation ;
- la chambre d'aspersion est réalisée dans un organe d'aspersion rapporté qui est logé dans une cavité du corps de l'élément d'essuie-glace ;
- la cavité est réalisée venue de matière par moulage et est ouverte dans la face inférieure du corps de l'élément d'essuie-glace ;
- l'organe d'aspersion est une tête d'aspersion comportant un raccord d'alimentation en liquide de lavage prévu pour être raccordé à une extrémité libre du tuyau;
- la chambre d'aspersion est réalisée venue de matière par moulage avec le corps de l'élément d'essuie-glace ;
- la chambre d'aspersion est délimitée par au moins une cloison transversale comportant un orifice d'alimentation dans lequel débouche une extrémité libre du tuyau d'alimentation ;
- l'élément d'essuie-glace comporte deux chambres d'aspersion successives agencées longitudinalement et entre lesquelles sont prévus des moyens de raccordement hydraulique des deux chambres et des moyens d'accrochage de l'essuie-glace sur l'élément d'essuie-glace ;
- la chambre d'aspersion est agencée au voisinage de l'extrémité de l'élément d'essuie-glace ;
- le tuyau d'alimentation est emboîté dans la rainure ;
- le corps de l'élément d'essuie-glace est surmoulé sur le tuyau d'alimentation ;
- l'organe d'aspersion est emboîté dans la cavité;
- le corps de l'élément d'essuie-glace est surmoulé sur l'organe d'aspersion ;

D'autres caractéristiques et avantages de l'invention apparaîtront à la lecture de la description détaillée qui va suivre pour la compréhension de laquelle on se reportera aux dessins annexés dans lesquels :
- La figure 1 est une vue de dessous d'un bras d'essuie-glace réalisé conformément aux enseignements de l'invention équipé d'un dispositif d'aspersion comportant une tête double d'aspersion ;
- la figure 2 est une vue en section partielle selon la ligne 2-2 de la figure 1 ;
- la figure 3 est une vue en section partielle selon la ligne 2-2 de la figure 1 de la portion d'extrémité libre du bras d'essuie-glace représentée à plus grande échelle ;
- les figures 4 et 5 sont des vues similaires à celles de la figure 3 qui illustrent des variantes de réalisation et d'agencement du dispositif d'aspersion ; et
- les figures 6 et 7 sont des vues similaires à celles de la figure 3 qui illustrent d'autres variantes de réalisation du dispositif d'aspersion dans lesquelles les chambres d'aspersion sont réalisées venues de matière par moulage avec le bras d'essuie-glace.

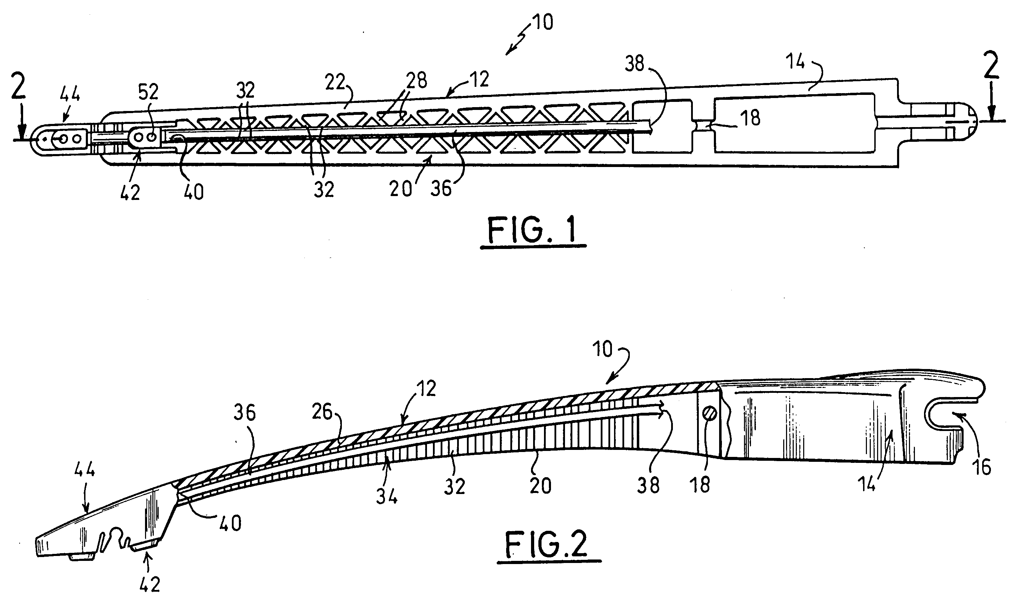

Le bras d'essuie-glace 10 qui est illustré aux figures 1 et 2 est une pièce de forme générale allongée constituée par un corps 12 moulé en matière plastique en une seule pièce.

Le tronçon d'extrémité 14 du corps 12 comporte des moyens 16 pour assurer le montage, avec articulation, du bras d'essuie-glace sur des moyens d'entraînement en rotation alternée de l'essuie-glace (non représentés) ainsi qu'une tige transversale 18 pour l'accrochage d'un ressort de pression d'essuyage (non représenté).

Le corps 12 du bras d'essuie-glace 10 est une pièce moulée qui présente, en section transversale, une forme générale de U renversé délimitée par deux joues latérales parallèles 22 et 24 reliées entre elles par un dos supérieur 26, le corps 12 présente ainsi un logement longitudinal 30 ouvert dans la face inférieure 20 prévue pour être tournée vers la vitre à essuyer (non représentée).

L'intérieur du corps 12 du bras d'essuie-glace 10 est renforcé par une série de cloisons transversales inclinées 28 formant des croisillons qui s'étendent depuis le dos supérieur 26 jusqu'à la face inférieure 20.

Conformément à l'invention, le corps 12 comporte une rainure 34 longitudinale centrale qui est délimitée transversalement par les bords verticaux en vis-à-vis 32 des cloisons 12.

La rainure 34 s'étend longitudinalement tout le long du corps 12 et sa largeur transversale est légèrement inférieure au diamètre d'un tuyau d'alimentation 36 qui appartient à un dispositif de lavage de la vitre à essuyer.

Le tuyau d'alimentation 36 peut être un tuyau souple ou semi-rigide qui, dans le mode de réalisation illustré sur les figures, est emboîté dans la rainure ouverte 34 depuis la face inférieure 20 à l'intérieur 12 du bras d'essuie-glace 10.

Sur les figures, on a interrompu volontairement le tuyau d'alimentation 36 au niveau de l'une de ses extrémités 38 qui est prévue pour être reliée à des moyens (non représentés) d'alimentation en liquide de lavage du dispositif de lavage.

L'autre extrémité longitudinale libre 40 du tuyau d'alimentation 36 est prévue pour être reliée à une tête 42 d'aspersion de la vitre à essuyer.

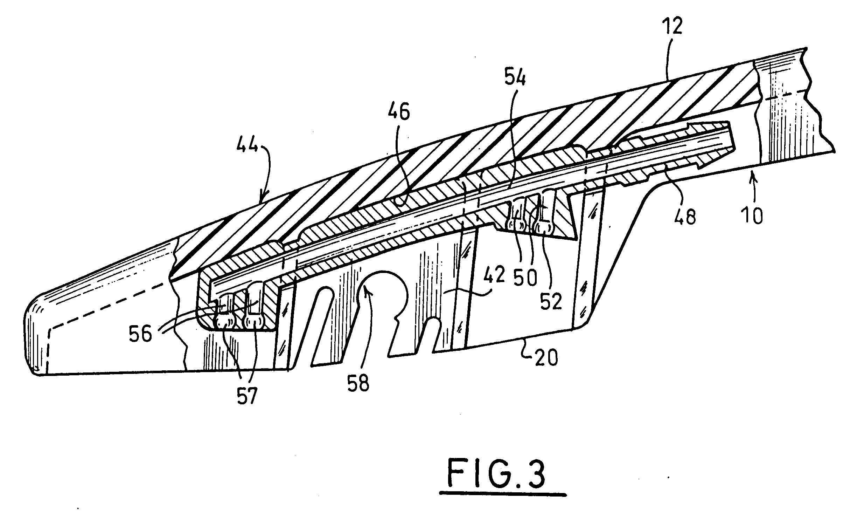

Comme on peut le voir sur la figure 3, la portion d'extrémité libre 44 du corps 12 du bras d'essuie-glace 10 comporte une cavité 46 qui est ouverte dans la face inférieure 20 et qui reçoit la tête d'aspersion 42.

Dans le mode de réalisation illustré aux figures 1 à 3, la tête d'aspersion 42 est un organe rapporté qui est emboîté élastiquement dans la cavité 46 et qui comporte un raccord 48 prévu pour recevoir l'extrémité libre 40 du tuyau d'alimentation 36.

La tête d'aspersion 42 comporte une première chambre double d'aspersion 50 qui se termine par deux orifices d'aspersion 52 orientés en direction de la vitre à essuyer.

La chambre double d'aspersion 50 est reliée au raccord 48 par un conduit longitudinal 54 qui se prolonge longitudinalement en direction d'une seconde chambre double d'aspersion 56 agencée à l'extrémité libre de la tête d'aspersion 42 et qui se termine par deux orifices 57.

Le conduit 54 qui relie les deux chambres d'alimentation doubles 52 et 56 s'étend au-dessus d'une partie intermédiaire de la portion d'extrémité libre 44 du corps 12 de l'essuie-glace 10 qui comporte des moyens, réalisés venus de matière par moulage, 58 pour l'accrochage d'un balai d'essuie-glace sur le bras d'essuie-glace 12.

Comme on peut le voir sur les figures 1 à 3, tous les logements, rainures, cavités, etc. du corps 12 du bras d'essuie-glace 10 sont ouverts en direction de sa face inférieure 20 ce qui en facilite grandement les opérations de moulage au moyen d'un moule comportant un ensemble de noyaux qui s'étendent tous selon la même direction.

Après avoir réalisé le moulage du corps 12 avec ses cavités et logements, l'assemblage des composants du dispositif de lavage est particulièrement simple dans la mesure où il consiste à emboîter élastiquement le tuyau souple d'alimentation 36 dans la rainure 34 ainsi que la tête d'aspersion 42 dans le logement 46.

Selon une variante de réalisation non représentée sur les figures 1 à 3, il est possible de surmouler le corps 12 sur le tuyau d'alimentation 36 et la tête d'aspersion 42, ces deux composants étant disposés dans le fond du moule qui délimite la face inférieure 20.

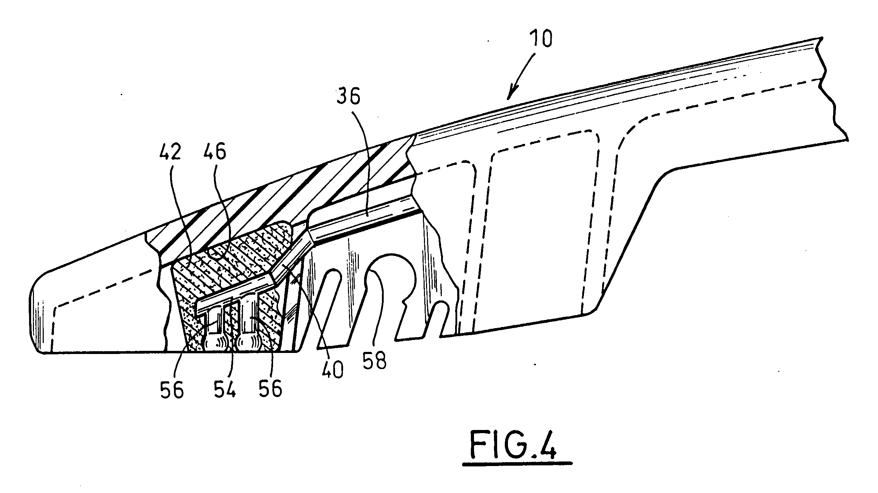

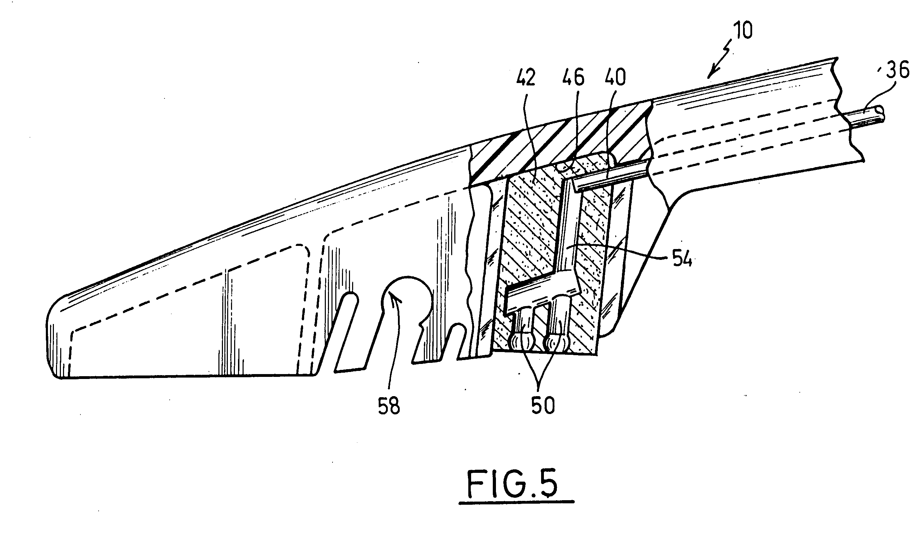

Dans la variante de réalisation illustrée aux figures 4 et 5, le dispositif d'aspersion comporte une seule chambre d'aspersion double avec son conduit de raccordement 54 qui est réalisé par moulage dans un élément rapporté 42 qui est disposé dans la cavité 46, vers l'arrière du bras d'essuie-glace 10 par rapport au moyen d'accrochage 58 (figure 5) ou vers l'avant (figure 4).

On voit ainsi que la réalisation d'un seul corps moulé en matière plastique 12 permet de réaliser toute une gamme de dispositifs de lavage selon le type des dispositifs d'aspersion 42, simple ou multiple, qui sont agencés dans la cavité 46.

La tête d'aspersion 42 réalisée sous la forme d'un élément moulé peut également être surmoulée sur l'extrémité libre 40 du tuyau d'alimentation 36, l'ensemble étant ensuite mis en place sous la forme d'une seule pièce par emboîtement dans la rainure 34 et la cavité 46.

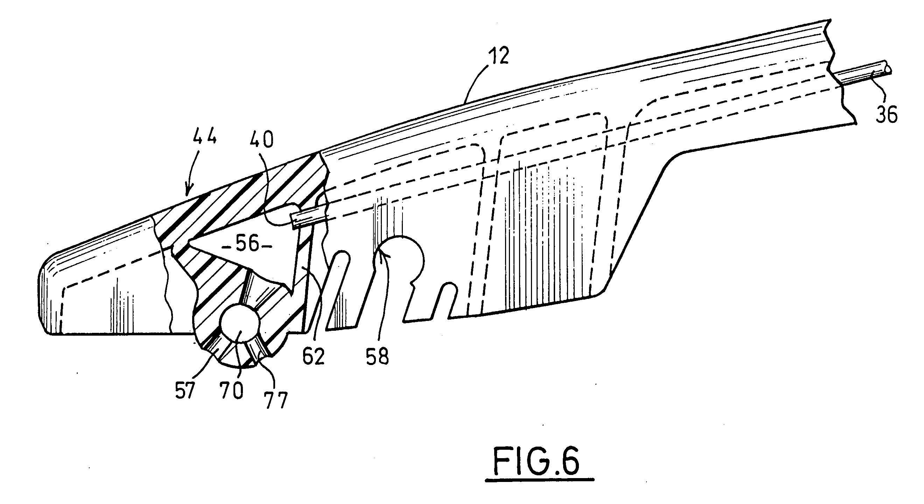

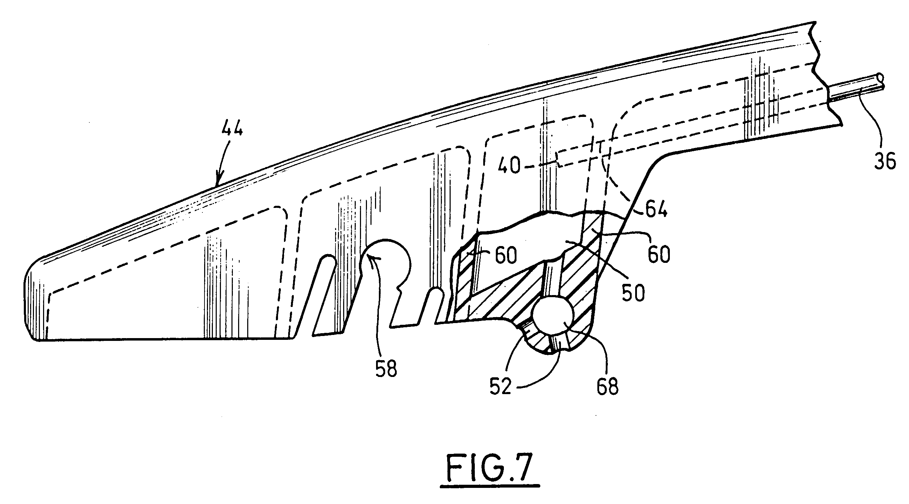

On a représenté aux figures 6 et 7 deux variantes de réalisation, comportant chacune une seule chambre d'aspersion qui est réalisée venue de matière par moulage en une seule pièce avec le corps 12.

La chambre 50, 56 est ainsi délimitée par des cloisons transversales 60, 62 dont l'une au moins comporte un orifice d'alimentation 64, 66 qui reçoit l'extrémité libre 40 du tuyau d'alimentation 36.

La chambre d'aspersion 50, 56 peut être reliée aux orifices associés d'aspersion 52, 57 par une chambre de turbulence 68, 70.

Les différentes chambre d'aspersion et de turbulence sont réalisées venues de matière par moulage, par exemple selon une technique du type à cire fondue.

On a représenté aux figures 6 et 7 deux portions d'extrémité 44 appartenant à des corps 12 distincts, mais il est bien entendu possible de réaliser simultanément les deux chambre d'aspersion dans un même corps et de les utiliser ou non selon qu'on les relie entre elles et que l'on relie la première chambre d'aspersion 50 au tuyau d'alimentation 36.

## Revendications

1. Bras d'essuie-glace (10) de forme générale allongée dont le corps (12) présente, en section transversale, une forme générale de U renversé délimitée par deux joues latérales parallèles (22, 24) reliées entre elles par un dos supérieur et délimite un logement longitudinal (30) qui est ouvert dans la face inférieure de l'élément tournée vers la vitre à essuyer et qui reçoit un tuyau d'alimentation (36) dans lequel circule un liquide de lavage prévu pour alimenter au moins un dispositif (42) d'aspersion de la vitre, caractérisé en ce que le corps (12) est réalisé par moulage et est renforcé par des cloisons transversales et en ce que le tuyau d'alimentation (36) est reçu dans une rainure (34) formée dans lesdites cloisons.

2. Bras d'essuie-glace selon la revendication 1, caractérisé en ce que le dispositif d'aspersion (42) comporte une chambre d'aspersion (50, 56) agencée à l'intérieur du corps (12) de l'élément d'essuie-glace (10).

3. Bras d'essuie-glace selon la revendication 2, caractérisé en ce que la chambre d'aspersion comporte au moins un orifice d'aspersion (52, 57) orienté vers la vitre à essuyer.

4. Bras d'essuie-glace selon la revendication 1, caractérisé en ce que la chambre d'aspersion comporte au moins un orifice d'alimentation (46, 64, 66) en liquide de lavage qui est relié à une extrémité (40) du tuyau d'alimentation (36).

5. Bras d'essuie-glace selon l'une quelconque des revendications 2 à 4, caractérisé en ce que la chambre d'aspersion est réalisée dans un organe d'aspersion rapporté (42) qui est logé dans une cavité (46) du corps (12) de l'élément d'essuie-glace (10).

6. Bras d'essuie-glace selon la revendication 5, caractérisé en ce que la cavité (46) est réalisée venue de matière par moulage et est ouverte dans la face inférieure (20) du corps (12) de l'élément d'essuie-glace (10).

7. Bras d'essuie-glace selon l'une des revendications 5 ou 6, caractérisé en ce que l'organe d'aspersion est une tête d'aspersion (42) comportant un raccord (46) d'alimentation en liquide de lavage prévu pour être raccordé à une extrémité libre (40) du tuyau d'alimentation (36).

8. Bras d'essuie-glace selon l'une quelconque des revendications 2 à 4, caractérisé en ce que la chambre d'aspersion est réalisée venue de matière par moulage avec le corps (12) de l'élément d'essuie-glace (10).

9. Bras d'essuie-glace selon la revendication 8, caractérisé en ce que la chambre d'aspersion est délimitée par au moins une cloison transversale (60, 62) comportant un orifice (64, 66) d'alimentation dans lequel débouche une extrémité libre (40) du tuyau d'alimentation (36).

10. Bras d'essuie-glace selon l'une quelconque des revendications 2 à 9, caractérisé en ce qu'il comporte deux chambres d'aspersion successives (50, 56) agencées longitudinalement et entre lesquelles sont prévus des moyens (54) de raccordement hydraulique des deux chambres et des moyens (58) d'accrochage d'un composant de l'essuie-glace sur l'élément d'essuie-glace (10).

11. Bras d'essuie-glace selon l'une quelconque des revendications 2 à 10, caractérisé en ce que la chambre d'aspersion est agencée au voisinage de l'extrémité (44) de l'élément d'essuie-glace.

12. Bras d'essuie-glace selon l'une quelconque des revendications précédentes, caractérisé en ce que le tuyau d'alimentation (36) est emboîté dans la rainure (34).

13. Bras d'essuie-glace selon l'une quelconque des revendications 1 à 11, caractérisé en ce que le corps de l'élément d'essuie-glace est surmoulé sur le tuyau d'alimentation (36).

14. Bras d'essuie-glace selon l'une quelconque des revendications 5 à 7, caractérisé en ce que l'organe d'aspersion (42) est emboîté dans la cavité (46).

15. Bras d'essuie-glace selon l'une quelconque des revendications 5 à 7, caractérisé en ce que le corps de l'élément d'essuie-glace (12) est surmoulé sur l'organe d'aspersion.

## Claims

1. Wiper arm (10) of elongate shape overall, whose body (12) has, in transverse section, the general shape of an inverted U delimited by two parallel side cheeks (22, 24) connected together by a top web and delimits a longitudinal housing (30) which is open in the bottom face of the element turned towards the pane to be wiped and which receives a supply tube (36) in which a washing liquid flows, designed to supply at least one device (42) for spraying the pane, characterised in that the body (12) is produced by moulding and is reinforced by transverse partitions and in that the supply tube (36) is received in a groove (34) formed in the said partitions.

2. Wiper arm according to Claim 1, characterised in that the spray device (42) has a spray chamber (50, 56) arranged inside the body (12) of the wiper element (10).

3. Wiper arm according to Claim 2, characterised in that the spray chamber has at least one spray orifice (52, 57) oriented towards the pane to be wiped.

4. Wiper arm according to Claim 1, characterised in that the spray chamber has at least one orifice (46, 64, 66) for supplying washing liquid which is connected to one end (40) of the supply tube (36).

5. Wiper arm according to any one of Claims 2 to 4, characterised in that the spray chamber is produced in an attached spray member (42) which is housed in a cavity (46) in the body (12) of the wiper element (10).

6. Wiper arm according to Claim 5, characterised in that the cavity (46) is produced by moulding in one piece and is open in the bottom face (20) of the body (12) of the wiper element (10).

7. Wiper arm according to one of Claims 5 or 6, characterised in that the spray member is a spray head (42) having a coupling (46) supplying washing liquid designed to be connected to a free end (40) of the supply tube (36).

8. Wiper arm according to any one of Claims 2 to 4, characterised in that the spray chamber is produced by moulding in one piece with the body (12) of the wiper element (10).

9. Wiper arm according to Claim 8, characterised in that the spray chamber is delimited by at least one transverse partition (60, 62) having a supply orifice (64, 66) into which a free end (40) of the supply tube (36) opens out.

10. Wiper arm according to any one of Claims 2 to 9, characterised in that it has two successive spray chambers (50, 56) arranged longitudinally and between which there are provided means (54) for the hydraulic connection of the two chambers and means (58) for attaching a wiper component to the wiper element (10).

11. Wiper arm according to any one of Claims 2 to 10, characterised in that the spray chamber is arranged in the vicinity of the end (44) of the wiper element.

12. Wiper arm according to any one of the preceding claims, characterised in that the supply tube (36) is nested in a groove (34).

13. Wiper arm according to any one of Claims 1 to 11, characterised in that the body of the wiper element is moulded onto the supply tube (36).

14. Wiper arm according to any one of Claims 5 to 7, characterised in that the spray member (42) is nested in the cavity (46).

15. Wiper arm according to any one of Claims 5 to 7, characterised in that the body of the wiper element (12) is moulded onto the spray member.

## Patentansprüche

1. Scheibenwischerarm (10) mit langgestreckter Gesamtform, dessen Körper (12) im Querschnitt die Form eines umgekehrten U aufweist, die durch zwei parallele Seitenschenkel (22, 24) begrenzt wird, die durch einen oberen Rücken miteinander verbunden sind, und eine Längsaufnahme (30) begrenzt, die in der zu der zu wischenden Scheibe gerichteten Unterseite des Elements offen ist und die eine Zuleitung (36) aufnimmt, in der eine Waschfüssigkeit zirkuliert, die für die Zuführung zu mindestens einer Spritzvorrichtung (42) für die Scheibe vorgesehen ist, **dadurch gekennzeichnet,** daß der Körper (12) als Formteil ausgeführt und durch Querzwischenwände verstärkt ist und daß die Zuleitung (36) in eine in den besagten Zwischenwänden ausgebildete Nut (34) eingesetzt ist.

2. Scheibenwischerarm nach Anspruch 1, **dadurch gekennzeichnet,** daß die Spritzvorrichtung (42) eine im Innern des Körpers (12) des Scheibenwischerelements (10) angeordnete Spritzkammer (50, 56) umfaßt.

3. Scheibenwischerarm nach Anspruch 2, **dadurch gekennzeichnet,** daß die Spritzkammer mindestens eine zu der zu wischenden Scheibe gerichtete Spritzöffnung (52, 57) umfaßt.

4. Scheibenwischerarm nach Anspruch 1, **dadurch gekennzeichnet,** daß die Spritzkammer mindestens eine Zuleitungsöffnung (46, 64, 66) für die Zufuhr von Waschflüssigkeit umfaßt, die mit einem Ende (40) der Zuleitung (36) verbunden ist.

5. Scheibenwischerarm nach einem der Ansprüche 2 bis 4, **dadurch gekennzeichnet,** daß die Spritzkammer in einem angefügten Spritzorgan (42) ausgeführt ist, das in einer Austiefung (46) des Körpers (12) des Scheibenwischerelements (10) aufgenommen ist.

6. Scheibenwischerarm nach Anspruch 5, **dadurch gekennzeichnet,** daß die Austiefung (46) einstückig angeformt und in der Unterseite (20) des Körpers (12) des Scheibenwischerelements (10) offen ist.

7. Scheibenwischerarm nach einem der Ansprüche 5 oder 6, **dadurch gekennzeichnet,** daß das Spritzorgan ein Spritzkopf (42) ist, der einen Zuleitungsanschluß (46) für Waschflüssigkeit umfaßt, der vorgesehen ist, um an einem freien Ende (40) der Zuleitung (36) angebracht zu werden.

8. Scheibenwischerarm nach einem der Ansprüche 2 bis 4, **dadurch gekennzeichnet,** daß die Spritzkammer einstückig am Körper (12) des Scheibenwischerelements (10) angeformt ist.

9. Scheibenwischerarm nach Anspruch 8, **dadurch gekennzeichnet,** daß die Spritzkammer durch mindestens eine Querzwischenwand (60, 62) begrenzt wird, die eine Zuleitungsöffnung (64, 66) umfaßt, in die ein freies Ende (40) der Zuleitung (36) mündet.

10. Scheibenwischerarm nach einen der Ansprüche 2 bis 9, **dadurch gekennzeichnet,** daß er zwei aufeinanderfolgende Spritzkammern (50, 56) umfaßt, die in Längsrichtung angeordnet sind und zwischen denen Druckanschlußmittel (54) für die zwei Kammern und Mittel (58) zum Einsetzen eines Bestandteils des Scheibenwischers am Scheibenwischerelement (10) vorgesehen sind.

11. Scheibenwischerarm nach einem der Ansprüche 2 bis 10, **dadurch gekennzeichnet,** daß die Spritzkammer in der Nähe des Endes (44) des Scheibenwischerelements angeordnet ist.

12. Scheibenwischerarm nach einem der vorangehenden Ansprüche, **dadurch gekennzeichnet,** daß die Zuleitung (36) in die Nut (34) eingepaßt ist.

13. Scheibenwischerarm nach einem der Ansprüche 1 bis 11, **dadurch gekennzeichnet,** daß der Körper des Scheibenwischerelements auf der Zuleitung (36) aufgeformt ist.

14. Scheibenwischerarm nach einem der Ansprüche 5 bis 7, **dadurch gekennzeichnet,** daß das Spritzorgan (42) in die Austiefung (46) eingepaßt ist.

15. Scheibenwischerarm nach einem der Ansprüche 5 bis 7, **dadurch gekennzeichnet,** daß der Körper des Scheibenwischerelements (12) auf dem Spritzorgan aufgeformt ist.
